## Europäisches Patentamt
## European Patent Office
## Office européen des brevets

(11) Veröffentlichungsnummer : **0 045 396**
**B1**

# EUROPÄISCHE PATENTSCHRIFT

(45) Veröffentlichungstag der Patentschrift :
19.12.84

(21) Anmeldenummer : 81105340.4

(22) Anmeldetag : 09.07.81

(51) Int. Cl.³ : **C 08 K 5/54, C 08 L 27/06, C 08 J 5/12**

(54) Haftvermittler und deren Verwendung zum Verbinden von Polyurethanen mit Deckschichten sowie ein Verfahren hierzu.

(30) Priorität : 05.08.80 DE 3029583

(43) Veröffentlichungstag der Anmeldung :
10.02.82 Patentblatt 82/06

(45) Bekanntmachung des Hinweises auf die Patenterteilung : 19.12.84 Patentblatt 84/51

(84) Benannte Vertragsstaaten :
AT BE DE FR GB IT SE

(56) Entgegenhaltungen :
US-A- 3 808 077
US-A- 3 900 687

(73) Patentinhaber : BASF Aktiengesellschaft
Carl-Bosch-Strasse 38
D-6700 Ludwigshafen (DE)

(72) Erfinder : Chakrabarti, Sarbananda
Bruesseler Ring 45
D-6700 Ludwigshafen (DE)
Erfinder : Hutchison, John, Dr.
Hans-Willmann-Strasse 8
D-6706 Wachenheim (DE)
Erfinder : Volkert, Otto, Dr.
Im Elertal 10
D-6719 Weisenheim (DE)

**Beschreibung**

Gegenstand der Erfindung sind Haftvermittler, enthaltend (a) ein Aminoalkyltrialkoxysilan, (b) ein feinteiliges Polyvinylchloridpulver und/oder (c) eine amorphe, hydrophobe Kieselsäure und (d) organische Lösungsmittel ; die Verwendung der haftvermittler zum Verbinden von zelligen und nichtzelligen Polyurethanen mit Deckschichten aller Art sowie ein Verfahren zur Verbesserung der Haftfähigkeit der Polyurethane auf den Deckschichten.

Voraussetzung für die Verbindung von gegebenenfalls schaumförmigen Kunststoffen mit festen Deckschichten aus denselben oder anderen gegebenenfalls faserverstärkten Kunststoffen, Holz oder Metall, ist eine ausreichende Haftung des gegebenenfalls schaumförmigen Kunststoffs aud den Deckschichten. Bei Sandwich-Konstruktionen muß beispielsweise die Haftung des schaumförmigen Kunststoffs auf der Deckschicht größer sein als die innere Festigkeit des schaumförmigen Kunststoffes, um ein Abheben der Deckschicht durch Beulen oder Knicken der Gesamtkonstruktion zu vermeiden.

Zur Verbesserung der Haftfähigkeit von Polyurethanschaumstoffen wurde vorgeschlagen, die Deckschicht, beispielsweise durch Schmirgeln oder Sandstrahlen aufzurauhen und mit einem Vorstrich mit Reaktionsbeschleuniger für den Verschäumungsprozeß, z. B. tertiären Aminen oder Metallsalzen, zu versehen. Anwendung findet auch ein vorstreichen der Deckschicht mit Klebstoff auf Basis Polyurethan, Polyesterharz, Epoxidharz oder Nitrilkautschuk. Die mit diesen Verfahren erzielte Verbesserung der Haftung ist jedoch für viele Anwendungsbereiche nicht ausreichend.

Bekannt ist außerdem, daß die Verbindung von organischen Harzen, wie z. B. Epoxid-, ungesättigten Polyester-, Phenol-, Melaminharzen und Polymeren, wie z. B. Styrol-, Butadien-, Styrol-Acrylnitril-Polymeren, Polyamid, Polypropylen und Polyestern mit hydrophilen Mineralfasern durch Spuren von reaktiven Silanen als Vernetzungsmittel verbessert werden kann. Nicht erwähnt wird hingegen die Verwendung von Silanen als Haftvermittler für Polyurethane.

Die Aufgabe der vorliegenden Erfindung bestand darin, die Haftung von Polyurethanen auf Deckschichten, insbesondere Metallen zu verbessern.

Die Aufgabe konnte überraschenderweise mit Hilfe der erfindungsgemäßen Haftvermittler gelöst werden.

Gegenstand der Erfindung sind somit Haftvermittler, die bezogen auf das Gesamtgewicht enthalten

a) 1 bis 10 Gew.-% eines Aminoalkyltrialkoxysilanes
b) 1 bis 20 Gew.-% eines feinteiligen Polyvinylchloridpulvers und/oder
c) 0,1 bis 5 Gew.-% einer amorphen, hydrophoben Kieselsäure und
d) 98 bis 65 Gew.-% mindestens eines organischen Lösungsmittels.

Überraschenderweise zeigte sich, daß bereits Mischungen von Aminoalkyltrialkoxysilanen (a) und Polyvinylchloridpulver (b) oder amorphen hydrophoben Kieselsäuren (c), gelöst in organischen Lösungsmitteln (d) und insbesondere methylenchloridhaltigen Lösungsmittelmischungen, die Haftfestigkeit von Polyurethanen auf Deckschichten beträchtlich erhöhen, wobei auch eine sehr hohe Haftfestigkeit nach Prüfungen der Alterung (Wechselalterung und Salzsprühtest), Entwachsung sowie Wärmelagerung erzielt wird. Mit Hilfe von Lösungen in organischen Lösungsmitteln von Aminoalkyltrialkoxysilanen (a), Polyvinylchloridpulver (b) und amorpher, hydrophober Kieselsäure, die vorzugsweise verwendet werden, werden zumindest gleiche, vorzugsweise jedoch noch bessere Hafteffekte erhalten ; durch einen zusätzlich auftretenden Verdickungseffekt lassen sich die Lösungen außerdem besser verarbeiten und haften stärker an den Deckschichten.

Vorteilhaft ist ferner, daß die Haftvermittler als Einkomponentensysteme einfach und wirtschaftlich handhabbar sind. Die mit Haftvermittler vorpräparierten Deckschichten können bei Temperaturen kleiner als 80 °C getrocknet werden, so daß der Energiebedarf geringer als bei herkömmlichen Methoden ist. Die vorbereitung bzw. Reinigung der Deckschichten mit Seifenwasser und Lösungsmittelgemisch ist wesentlich umweltfreundlicher als die bisher angewandten Verfahren, wie z. B. Beizen bzw. Passivieren der Oberflächen mit Säuren.

Zu den für die erfindungsgemäßen Haftvermittler verwendbaren Ausgangskomponenten des Gemisches (a) bis (c) sowie den organischen Lösungsmitteln (d) ist folgendes auszuführen :

Als Aminoalkyltrialkoxysilane (a) bewährt haben sich Aminogruppen, vorzugsweise primäre endständige Aminogruppen, haltige Trialkoxysilane mit 1 bis 8, vorzugsweise 2 bis 5 Kohlenstoffatomen im Alkylrest, wobei der Alkylrest gegebenenfalls Brückenglieder aus Heteroatomen, beispielsweise Sauerstoff, Schwefel oder NH-Gruppen gebunden enthalten kann, und 1 bis 4, vorzugsweise 1 bis 2 Kohlenstoffatomen im Alkoxyrest. Im einzelnen seien beispielhaft genannt ; γ-Aminodiethylenethertrimethoxysilan, γ-triethoxysilan, γ-(β-Aminoethyl)-aminobutyltrimethoxysilan, γ-(β-Aminoethyl)-amino-butyltriethoxysilan, γ-Aminoethyltrimethoxysilan, γ-Aminobutyltriethoxysilan, γ-Aminohexyltriethoxysilan, γ-Aminohexyltrimethoxysilan und vorzugsweise γ-Aminopropyltriethoxysilan. Die Aminoalkyltrialkoxysilane können sowohl einzeln wie als Mischungen verwendet werden.

Geeignete feinteilige Polyvinylchloridpulver (b) besitzen K-Werte von 55 bis 80, vorzugsweise 60 bis 75, Schüttdichten von 0,3 bis 0,5, vorzugsweise 0,35 bis 0,45 g/cm³ und Teilchengrößen gleich oder

größer als 60 μm von weniger als 1 %. Feinteilige Polyvinylchloridpulver der genannten Art sind Handelsprodukte und können beispielsweise unter dem Warenzeichen ®Vinoflex KR 3362 von der BASF Aktiengesellschaft bezogen werden.

Als amorphe, hydrophobe Kieselsäuren (c) kommen Produkte mit Teilchendurchmessern von 10 bis 40 nm, vorzugsweise 12 bis 30 nm, Schüttgewichten von ungefähr 30 bis 60 g/l, vorzugsweise 40 bis 50 g/l und BET-Oberflächen von 90 bis 175 m²/g, vorzugsweise 90 bis 150 m²/g in Betracht, die beispielsweise durch Flammenhydrolyse aus hydrophilem Siliciumdioxid und Dimethyldichlorsilan hergestellt werden. Eine amorphe, hydrophobe Kieselsäure, die erfindungsgemäß verwendbar ist, ist unter dem Warenzeichen ®Aerosil R 972 der Degussa im Handel.

Als organische Lösungsmittel (d) werden vorteilhafterweise solche verwendet, in denen die Ausgangskomponenten (a) bis (c) vollständig löslich sind und die zur Reduzierung der Entflammbarkeit mit Methylenchlorid mischbar sind. Im einzelnen seien beispielhaft genannt : Dimethylformamid, Tetrahydrofuran, Ethanol und vorzugsweise Cyclohexanon. Vorzusweise eingesetzt werden Lösungsmittelmischungen aus den genannten Lösungsmitteln und Methylenchlorid, die bezogen auf das Gesamtgewicht 80 bis 40, vorzugsweise 45 bis 55 Gew.-% Methylenchlorid enthalten. Insbesondere bewährt hat sich eine Mischung aus Cyclohexanon und Methylenchlorid im Gewichtsverhältnis von ungefähr 50 : 50.

Zur Herstellung der Haftvermittler werden die Ausgangskomponenten (a) bis (c) einzeln nacheinander oder vorzugsweise gleichzeitig, gegebenenfalls unter Rühren und Erwärmen in solchen Mengen in den organischen Lösungsmitteln (d) gelöst, daß die Haftvermittler enthalten oder vorzugsweise bestehen aus, bezogen auf das Gesamtgewicht

a) 1 bis 10 Gew.-%, vorzugsweise 1 bis 5 Gew.-% eines Aminoalkyltrialkoxysilanes,
b) 1 bis 20 Gew.-%, vorzugsweise 1 bis 5 Gew.-% eines feinteiligen Polyvinylchloridpulvers und/oder
c) 0,1 bis 5 Gew.-% vorzugsweise 0,1 bis 2 Gew.-% einer amorphen, hydrophoben Kieselsäure und
d) 98 bis 65 Gew.-%, vorzugsweise 98 bis 88 Gew.-% mindestens eines organischen Lösungsmittels.

Die erfindungsgemäßen Haftvermittler werden vorteilhafterweise zum Verbinden von nichtzelligen und vorzugsweise zelligen Polyurethanen mit festen Deckschichten verwendet. Als zellige Polyurethane seien beispielsweise genannt : Polyurethan-Integralschaumstoffe, vorzugsweise solche mit Gesamtdichten von 300 bis 1 100 g/Liter, Polyurethan-Hartschaumstoffe, wie sie üblicherweise für Sandwich-Konstruktionen Anwendung finden und vorzugsweise zellige Polyurethan-Formteile, die nach der RIM-Technik hergestellt werden. Als geeignete Deckschichten kommen beispielsweise in Betracht : gegebenenfalls Verstärkungsmittel, wie z. B. anorganische oder organische Füllstoffe, Glas- oder Kohlefasern enthaltende Kunststoffe auf Basis von Polyestern, Polyamiden, Polycarbonat, Polyäthylen, Polypropylen, Epoxid-, Melamin-, Harnstoff-, Melamin-Harnstoff-Harzen und vorzugsweise Polyvinylchlorid und ungesättigten Polyesterharzen, Holz beispielsweise Sperrholz oder Spanplatten und insbesondere Metalle, beispielsweise Stahlblech und vorzugsweise Aluminium.

Zur Erzielung einer verbesserten Haftfähigkeit werden die Deckschichten zweckmäßigerweise vor der Beschichtung mit Haftvermittler gereinigt. Dies kann beispielsweise durch Waschen der Oberfläche mit Seifenwasser, Klarspülen und Trocknen geschehen. Vorteilhafterweise werden die Deckschichten, insbesondere solche aus Aluminium, anschließend zusätzlich mit einem Lösungsmittelgemisch, beispielsweise aus Ethanol, Aceton und Methylenchlorid im Gewichtsverhältnis 1 : 1 : 1 behandelt und bei Temperaturen von ungefähr 23 bis 80 °C getrocknet.

Auf die gereinigten und entfetteten Deckschichten wird der Haftvermittler, beispielsweise durch Bestreichen, Spritzen oder vorzugsweise Besprühen mit einer Sprühpistole, aufgetragen und bei Temperaturen von ungefähr 20 bis 120 °C, vorzugsweise 50 bis 80 °C getrocknet. Die vorpräparierten Deckschichten werden danach mit der gegebenenfalls schaumfähigen Polyurethanmasse beschichtet.

Die in den Beispielen genannten Teile sind Gewichtsteile.

## Beispiele

Allgemeine Herstellungsvorschrift für die Haftvermittler

Zu dem organischen Lösungsmittel bzw. Lösungsmittelgemisch fügt man unter Rühren bei 23 °C γ-Aminopropyltriethoxysilan, ein feinteiliges Polyvinylchloridpulver (Handelsprodukt Vinoflex KR 3362 der BASF Aktiengesellschaft) und/oder eine amorphe, hydrophobe Kieselsäure (Handelsprodukt Aerosil R 972 der Degussa AG) in den in Tabelle 1 genannten Mengen. Die Mischung wird bei 23 °C solange gerührt (ungefähr 3 bis 6 Stunden), bis sich eine homogene Lösung bildet.

Verbundkörper

Ein Aluminiumblech mit den Dimensionen 90 × 30 × 0,15 bis 0,2 cm wird mit Seifenwasser sehr gut gewaschen, klargespült und bei 80 °C getrocknet. Das trockene Aluminiumblech wird danach nochmals sorgfältig mit einem Lösungsmittelgemisch aus Ethanol, Aceton und Methylenchlorid im Gewichtsverhältnis 1 : 1 : 1 gereinigt und bei 80 °C getrocknet.

Auf das trockene Aluminiumblech wird einseitig der Haftvermittler mit Hilfe einer Sprühpistole, angeschlossen an trockene Preßluft, aufgesprüht. Das so behandelte Aluminiumblech wird bei 80 °C in 15 Minuten getrocknet.

Das vorpräparierte Aluminiumblech wird in eine auf 55 °C erwärmte Metallform der Größe 90 X 30 X 0,36 cm so eingelegt, daß die mit Haftvermittler beschichtete Oberfläche dem Formhohlraum zugewandt ist. Die Form wird verschlossen und mit 850 g eines 2-Komponenten-Polyurethansystems gefüllt, das in der Form ausreagiert und besteht aus :

## Komponente A

74,9 Gew.-Teilen eines handelsüblichen trifunktionellen Polyether-polyols auf Basis Propylen-Ethylenoxid mit einer OH-Zahl von 30
20  Gew.-Teilen Butandiol-1,4
5   Gew.-Teilen Fluortrichlormethan
0,05 Gew.-Teilen Dibutylzinndilaurat und
0,05 Gew.-Teilen Triethylendiamin.

## Komponente B

Handelsübliches carbodiimidmodifiziertes 4,4'-Diphenylmethandiisocyanat

Mischungsverhältnis Komponenten A : B = 500 g : 350 g.
Die Formtemperatur beträgt 50 °C und die Entformungszeit des Polyurethans ungefähr 2 Minuten.

Prüfung der Haftfestigkeit

Aus dem erhaltenen mit Aluminiumblech beschichteten Formkörper werden Prüfkörper (30 × 6 cm) ausgesägt und bei 25 °C 3 Tage gelagert. Danach werden folgende Prüfungen durchgeführt :

1) Alterung : Die Prüfkörper für die Alterung werden fünfmal folgendem Zyklus unterworfen :

Lagerung :  4 Stunden bei + 80 °C,
            4 Stunden bei − 30 °C und
            16 Stunden bei Schwitzwasserklima nach DIN 50 017 SK.

An diesen Zyklus schließen sich 168 Stunden Salzsprühtest nach DIN 50 021 an.
2) Wärmelagerung : Die Prüfkörper werden eine Stunde bei 120 °C im Umluftofen gelagert.
3) Entwachsung : Die Prüfkörper werden mit dem Wachs VB 195 der Firma Pfinders, Böblingen eingesprüht und eine Woche bei 25 °C gelagert. Nach dieser Lagerung wird das Wachs mit einer 70 °C heißen wäßrigen Lösung des Entkonservierungsschampoos (2 Gew.-Teile Wasser zu 1 Gew.-Teil Schampoo APFG 75 der Firma Pfinders, Böblingen) abgewaschen.

Nach Beendigung der jeweiligen Lagerprüfungen 1) bis 3) werden die Prüfkörper 48 Stunden bei 25 °C gelagert und danach die Haftfestigkeit in Anlehnung an DIN 53 530 gemessen.
Die erhaltenen ergebnisse sind in Tabelle 1 zusammengefaßt.
In der Tabelle bedeutet die Abkürzung Sb, daß der Schaumstoff gebrochen ist bevor sich das Schaumteil von der Aluminiumdeckschicht löste, d. h. die Haftung des Polyurethanschaumstoffs auf der Deckschicht ist größer als seine innere Festigkeit (Zugfestigkeit).

(Siehe Tabelle 1 Seite 5 f.)

Tabelle 1

| Bei-spiele | Vergleichs-beispiele | Haftvermittler | | | γ-Amino-propyl-ethoxysilan Gew.-Teile | Vinoflex KR 3362 Gew.-Teile | Aerosil R 972 Gew.-Teile | Haftfestigkeit (N/mm) | | |
| --- | --- | --- | --- | --- | --- | --- | --- | --- | --- | --- |
| | | Lösungsmittelmischung | | | | | | | | |
| | | Art | Gew.-Verhältnis | Gew.-Teile | | | | Alterung | Wärme-lagerung | Entwachsung |
| | A | Cyclohexanon/ Methylenchlorid | 50 : 50 | 100 | — | — | — | keine Haftung | | |
| | B | " | " | 95 | 5 | — | — | 1,5 | 1,4 | 0,4 |
| 1 | | " | " | 90 | 5 | 5 | — | 1,2 Sb | 1,5 Sb | 1,2 Sb |
| 2 | | " | " | 85 | 5 | 10 | — | 1,2 Sb | 1,5 Sb | 1,5 Sb |
| 3 | | " | " | 93 | 5 | — | 2 | 1,2 Sb | 1,4 Sb | 1,6 Sb |
| 4 | | " | " | 92 | 4,5 | 3 | 0,5 | 1,3 Sb | 1,5 Sb | 1,5 Sb |
| 5 | | " | " | 87 | 4 | 8 | 1 | 1,3 Sb | 1,6 Sb | 1,5 Sb |
| 6 | | Ethanol/ Methylenchlorid | 20 : 80 | 90 | 5 | 5 | — | 1,4 Sb | 1,4 Sb | 1,3 Sb |
| 7 | | " | " | 85 | 5 | 10 | — | 1,3 Sb | 1,5 Sb | 1,4 Sb |
| 8 | | " | " | 93 | 5 | — | 2 | 1,5 Sb | 1,6 Sb | 1,6 Sb |
| 9 | | " | " | 92 | 4,5 | 3 | 0,5 | 1,4 Sb | 1,6 Sb | 1,5 Sb |

0 045 396

**Ansprüche**

1. Haftvermittler, enthaltend, bezogen auf das Gesamtgewicht,

a) 1 bis 10 Gew.-% eines Aminoalkyltrialkoxysilanes
b) 1 bis 20 Gew.-% eines feinteiligen Polyvinylchloridpulvers und/oder
c) 0,1 bis 5 Gew.-% einer amorphen, hydrophoben Kieselsäure und
d) 98 bis 65 Gew.-% mindestens eines organischen Lösungsmittels.

2. Haftvermittlerlösungen, erhalten aus

a) 1 bis 10 Gew.-% eines Aminoalkyltrialkoxysilanes
b) 1 bis 20 Gew.-% eines feinteiligen Polyvinylchloridpulvers und/oder
c) 0,1 bis 5 Gew.-% einer amorphen, hydrophoben Kieselsäure und
d) 98 bis 65 Gew.-% mindestens eines organischen Lösungsmittels,

wobei die Gewichtsprozente bezogen sind auf das Gesamtgewicht.
3. Haftvermittler nach Anspruch 1, enthaltend, bezogen auf das Gesamtgewicht

a) 1 bis 5 Gew.-% eines Aminoalkyltrialkoxysilans
b) 1 bis 5 Gew.-% eines feinteiligen Polyvinylchloridpulvers und/oder
c) 0,1 bis 2 Gew.-% einer amorphen, hydrophoben Kieselsäure und
d) 98 bis 88 Gew.-% mindestens eines organischen Lösungsmittels.

4. Haftvermittler nach Anspruch 1, dadurch gekennzeichnet, daß als Aminoalkyltrialkoxysilan γ-Aminopropyltriethoxysilan verwendet wird.
5. Haftvermittler nach Anspruch 1, dadurch gekennzeichnet, daß als organische Lösungsmittel (d) Mischungen aus

e) Dimethylformamid, Tetrahydrofuran und/oder Cyclohexanon und
f) Methylenchlorid

verwendet werden.
6. Haftvermittler nach Anspruch 1, dadurch gekennzeichnet, daß die Lösungsmittelmischung enthält 80 bis 40 Gew.-% Methylenchlorid, bezogen auf das Gesamtgewicht der Lösungsmittel.
7. Haftvermittlerlösung, erhalten aus

a) 1 bis 10 Gew.-% γ-Aminopropyltriethoxysilan
b) 1 bis 20 Gew.-% eines feinteiligen Polyvinylchloridpulvers,
c) 0,1 bis 5 Gew.-% einer amorphen, hydrophoben Kieselsäure und
d) 98 bis 65 Gew.-% einer Lösungsmittelmischung aus Cyclohexanon/Methylenchlorid im Gewichtsverhältnis von ungefähr 50 : 50.

8. Verwendung der Haftvermittler nach den Ansprüchen 1 bis 7 zum Verbinden von zelligen oder nichtzelligen Polyurethanen mit festen Deckschichten.
9. Verfahren zur Verbesserung der Haftfähigkeit von zelligen oder nichtzelligen Polyurethanen auf festen Deckschichten aller Art, dadurch gekennzeichnet, daß man die Deckschichten vor dem Aufbringen der Polyurethanmassen mit Haftvermittler, enthaltend, bezogen auf das Gesamtgewicht,

a) 1 bis 10 Gew.-% eines Aminoalkyltrialkoxysilans
b) 1 bis 20 Gew.-% eines feinteiligen Polyvinylchloridpulvers und/oder
c) 0,1 bis 5 Gew.-% einer amorphen, hydrophoben Kieselsäure und
d) 98 bis 65 Gew.-% mindestens eines organischen Lösungsmittels

vorpräpariert.

**Claims**

1. An adhesion promoter containing, based on the total weight,

a) 1 to 10 percent by weight of an aminoalkyltrialkoxysilane,
b) 1 to 20 percent by weight of a finely divided polyvinyl chloride powder, and/or
c) 0.1 to 5 percent by weight of an amorphous hydrophobic silicic acid, and
d) 98 to 65 percent by weight of at least one organic solvent.

2. An adhesion promoter solution obtained from

a) 1 to 10 percent by weight of an aminoalkyltrialkoxysilane,
b) 1 to 20 percent by weight of a finely divided polyvinyl chloride powder, and/or
c) 0.1 to 5 percent by weight of an amorphous hydrophobic silicic acid, and
d) 98 to 65 percent by weight of at least one organic solvent,

the weight percentages being based on the total weight.

3. An adhesion promoter, as claimed in claim 1, comprising, based on the total weight,

a) 1 to 5 percent by weight of an aminoalkyltrialkoxysilane,
b) 1 to 5 percent by weight of a finely divided polyvinyl chloride powder, and/or
c) 0.1 to 2 percent by weight of an amorphous hydrophobic silicic acid, and
d) 98 to 88 percent by weight of at least one organic solvent.

4. An adhesion promoter as claimed in claim 1, wherein γ-aminopropyltriethoxysilane is used as the aminoalkyltrialkoxysilane.

5. An adhesion promoter as claimed in claim 1, wherein a mixture of

e) dimethylformamide, tetrahydrofuran and/or cyclohexanone, and
f) methylene chloride

is used as the organic solvent (d).

6. An adhesion promoter as claimed in claim 1, wherein the solvent mixture contains 80 to 40 percent by weight, based on the total weight of the solvents, of methylene chloride.

7. An adhesion promoter solution obtained from

a) 1 to 10 percent by weight of γ-aminopropyltriethoxysilane,
b) 1 to 20 percent by weight of a finely divided polyvinyl chloride powder,
c) 0.1 to 5 percent by weight of an amorphous hydrophobic silicic acid, and
d) 98 to 65 percent by weight of a solvent mixture of cyclohexanone and methylene chloride in a weight ratio of approximately 50 : 50.

8. The use of an adhesion promoter as claimed in claims 1 to 7 for bonding cellular or non-cellular polyurethanes to rigid facings.

9. A process for improving the adhesion of cellular or non-cellular polyurethanes to rigid facings of all kinds, wherein the facings are treated with an adhesion promoter containing, based on the total weight,

a) 1 to 10 percent by weight of an aminoalkyltrialkoxysilane,
b) 1 to 20 percent by weight of a finely divided polyvinyl chloride powder, and/or
c) 0.1 to 5 percent by weight of an amorphous hydrophobic silicic acid, and
d) 98 to 65 percent by weight of at least one organic solvent,

prior to the application of the polyurethane material.


**Revendications**

1. Agent intermédiaire d'adhérence contenant, rapporté au poids total,

a) 1 à 10 % en poids d'un aminoalkyltrialcoxysilane
b) 1 à 20 % en poids d'une poudre de polychlorure de vinyle finement divisée et/ou
c) 0,1 à 5 % en poids d'un acide silicique amorphe, hydrophobe et
d) 98 à 65 % en poids d'au moins un solvant organique.

2. Solutions d'agent intermédiaire d'adhérence obtenues à partir de

a) 1 à 10 % en poids d'un aminoalkyltrialcoxysilane
b) 1 à 20 % en poids d'une poudre de polychlorure de vinyle finement divisée et/ou
c) 0,1 à 5 % en poids d'un acide silicique amorphe, hydrophobe et
d) 98 à 65 % en poids d'au moins un solvant organique,

les pourcentages en poids étant rapportés au poids total.

3. Agent intermédiaire d'adhérence selon la revendication 1, contenant, rapporté au poids total

a) 1 à 5 % en poids d'un aminoalkyltrialcoxysilane
b) 1 à 5 % en poids d'une poudre de polychlorure de vinyle finement divisée et/ou
c) 0,1 à 2 % en poids d'un acide silicique amorphe, hydrophobe et
d) 98 à 88 % en poids d'au moins un solvant organique.

4. Agent intermédiaire d'adhérence selon la revendication 1, caractérisé par le fait que l'on utilise, comme aminoalkyltrialcoxysiolane, du γ-aminopropyltriéthoxysilane.

5. Agent intermédiaire d'adhérence selon la revendication 1, caractérisé par le fait que l'on utilise, comme solvant organique (d) des mélanges de

e) diméthylformamide, tétrahydrofuranne et/ou cyclohexanone et
f) chlorure de méthylène.

6. Agent intermédiaire d'adhérence selon la revendication 1, caractérisé par le fait que le mélange solvant contient 80 à 40 % en poids de chlorure de méthylène, rapporté au poids total du solvant.

7. Solution d'agent intermédiaire d'adhérence, obtenue à partir de

a) 1 à 10 % en poids de γ-aminopropyltriéthoxysilane
b) 1 à 20 % en poids d'une poudre de polychlorure de vinyle finement divisée
c) 0,1 à 5 % en poids d'un acide silicique amorphe, hydrophobe et
d) 98 à 65 % en poids d'un mélange solvant de cyclohexanone/chlorure de méthylène, dans un rapport en poids d'environ 50/50.

8. Utilisation de l'agent intermédiaire d'adhérence selon les revendications 1 à 7 pour lier des polyuréthanes cellulaires ou non à des couches de recouvrement solides.

9. Procédé pour améliorer l'adhésivité de polyuréthanes cellulaires ou non à des couches de recouvrement de tous types, caractérisé par le fait qu'avant l'application des masses de polyuréthane, on prépare les couches de recouvrement avec un agent intermédiaire d'adhérence contenant, rapporté au poids total,

a) 1 à 10 % en poids d'un aminoalkyltrialcoxysilane
b) 1 à 20 % en poids d'une poudre de polychlorure de vinyle finement divisée et/ou
c) 0,1 à 5 % en poids d'un acide silicique amorphe, hydrophobe et
d) 98 à 65 % en poids d'au moins un solvant organique.